# EUROPEAN PATENT APPLICATION

(11) **EP 1 099 967 A2**
(43) Date of publication of application: **16.05.2001**
(21) Application number: 00309917.3
(22) Date of filing: 08.11.2000
(51) Int. Cl.: G02B 6/38

(54) **Plastic split sleeve for ferrule connection**

(30) Priority: 09.11.1999 JP 31820199; 09.11.1999 JP 31820399
(71) Applicant: Nippon Telegraph and Telephone Corporation, Tokyo 100-8116 (JP)
(72) Inventor: Shuto, Yoshito, c/o NTT Intell. Property Center, Musashino-shi, Tokyo 180-8585 (JP); Iwano, Shinichi, c/o NTT Intell. Prop. Center, Musashino-shi, Tokyo 180-8585 (JP); Tohno, Shunichi, c/o NTT Intell. Prop. Center, Musashino-shi, Tokyo 180-8585 (JP); Sato, Hirotsugu, c/o NTT Intell. Prop. Center, Musashino-shi, Tokyo 180-8585 (JP); Sumida, Shin, c/o NTT Intell. Property Center, Musashino-shi, Tokyo 180-8585 (JP)
(74) Representative: Beresford, Keith Denis Lewis

(57) **Abstract**

A plastic optical alignment sleeve for conversion connector is provided which directly holds and connects optical fiber cords (09A,09B) including ferrules of different diameters (07A,07B) each having single-mode optical fibers inserted therein and which has high dimensional precision, mechanical strength, reliability and excellent cost effectiveness. The plastic optical alignment split sleeve (08) for conversion connector is installed in an adapter. It connects the optical fibers by inserting ferrules with different outer diameters. The plastic optical alignment split sleeve (08) in its basic geometry comprises: left and right thick hollow cylinders differing from each other in inner diameter and thickness; and a joint part. The plastic split sleeve is formed of a noncrystalline thermoplastic resin or thermosetting resin or of a resin compound. The slit is formed through the left and right thick hollow cylinders and the joint part.

## Description

The present invention relates to a plastic optical alignment sleeve for conversion connector which directly holds and connects optical fiber cords containing single-mode optical fibers and having ferrules with different outer diameters.

Advances in the optical communication technology are making a variety of communication services available to individual homes through optical fibers. The realization of an optical communication network for subscribers requires economically viable optical connectors.

To connect optical fibers used for optical communication, the conventional practice involves aligning inside a sleeve 02 two ferrules 01A, 01B, each sleeved over an optical fiber cord, as shown in

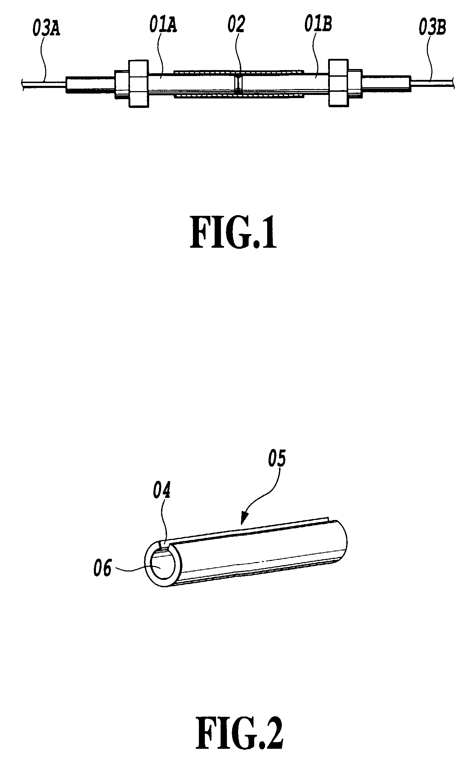

Fig. 1. Reference numbers 03A, 03B represent optical fiber cords.

Among the commonly used sleeves 02 for aligning the ferrules 01A, 01B is a split sleeve 05, a thick hollow cylindrical sleeve with a slit 04 extending parallel to the center axis thereof, as shown in Fig. 2. Such a split sleeve 05 is made of metal materials such as phosphor bronze or ceramics such as zirconia. The inner diameter of a through-hole of the split sleeve 05 is made smaller than the outer diameter of the ferrules 01A, 01B holding the optical fibers, so that when the ferrules 01A, 01B are inserted into the split sleeve 05, a gap is not easily formed between the ferrules 01A, 01B and the through-hole 06.

As for ferrules used in optical connectors, they are made of ceramics and polished to a high precision to realize a required dimensional accuracy for precise connection between the inserted optical fibers. An SC-type ferrule that has been in wide use is 2.499 mm in outer diameter. For higher density and cost-effectiveness, a narrow diameter ferrule is also used, a typical example of which is an MU-type ferrule with an outer diameter of 1.249 mm about one-half the conventional size.

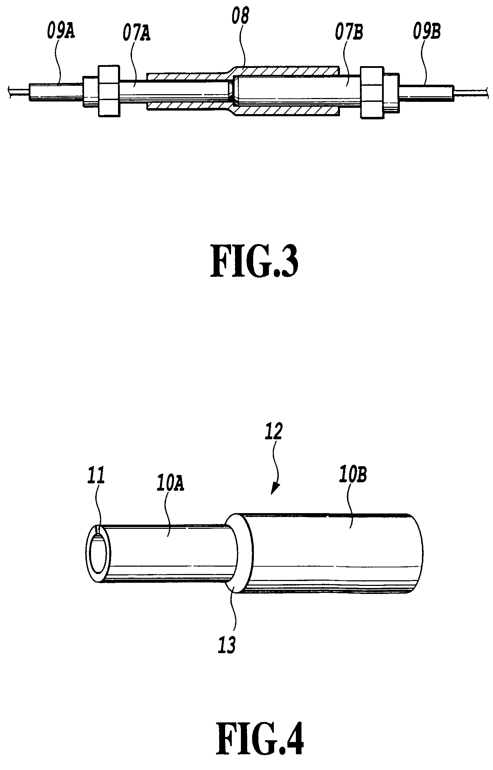

Under these circumstances, a conversion connector is used to connect two ferrules with different outer diameters. With this conversion connector, as shown in Fig. 3, two ferrules 07A, 07B with different outer diameters, each having optical fibers inserted therein, are aligned in a sleeve 08 to connect the optical fibers. Reference numbers 09A, 09B represent optical fiber cords.

As the sleeve 08 for aligning the ferrules 07A, 07B, as shown in Fig. 4, a split sleeve 12 is used, which consists of two thick hollow cylindrical sleeves 10A, 10B cut with a slit 11 extending parallel to the center axis of the cylinders. This split sleeve 12 has at an intermediate portion a joint part 13 for connecting the left and right cylindrical sleeves 10A, 10B with different sizes, with the slit 11 extending through the left and right cylindrical sleeves and the joint part.

The split sleeve 12 shown in Fig. 4, however, is very complex in geometry, with the left and right cylinders having different dimensions. So, it cannot be manufactured by the method used to fabricate the split sleeve 05 of Fig. 2. Hence, the split sleeve 12 is manufactured by cutting a metallic material such as phosphor bronze to a high precision. This in turn leads to a very high cost, hindering economical production of the conversion connector. When the ferrules are inserted into the split sleeve 12, the portion near the slit 11 deforms greatly, resulting in the axes of ferrules with different outer diameters easily shifting from each other, making the dimensional design difficult.

The present invention has been accomplished in light of the above problems to provide a plastic sleeve for conversion connector which directly holds and connects optical fiber cords having single-mode optical fibers inserted therein and including ferrules of different outer diameters. More specifically, it is an object of the present invention to provide a plastic sleeve for conversion connector with high dimensional accuracy, large mechanical strength, and excellent reliability and cost-effectiveness.

Accordingly, the first invention provides a plastic optical alignment sleeve for conversion connector, which is installed in an adapter used to connect optical fiber cords each having optical fibers inserted therein and which optically connects the optical fibers by inserting ferrules with different outer diameters attached to free ends of the optical fiber cords into the sleeve from its left and right ends, the plastic optical alignment sleeve in its basic geometry comprising: left and right thick hollow cylinders differing from each other in inner diameter and thickness; and a joint part formed at an intermediate portion of the sleeve for connecting the left and right thick hollow cylinders with different dimensions; wherein the plastic sleeve is formed of a noncrystalline thermoplastic resin or thermosetting resin or of a resin compound; wherein a slit is formed through the left and right thick hollow cylinders and the joint part.

The second invention provides a plastic optical alignment sleeve for conversion connector according to the first invention, wherein one of the thick hollow cylinders of the plastic sleeve has an inner diameter of between approximately 1.243 mm and 1.248 mm and a thickness of between approximately 0.2 mm and 0.7 mm and the other thick hollow cylinder has an inner diameter of between approximately 2.475 mm and 2.497 mm and a thickness of between approximately 0.4 mm and 0.8 mm.

The third invention provides a plastic optical alignment sleeve for conversion connector according to the first invention, wherein the joint part of the plastic sleeve is shaped like a truncated hollow cone whose angle of elevation as seen from the small-diameter thick hollow cylinder is in a range of between 30 degrees and 75 degrees, and the thickness of the joint part is in a range of between approximately 0.2 mm and 0.7 mm.

The fourth invention provides a plastic optical alignment sleeve for conversion connector according to the first invention, wherein the noncrystalline thermoplastic resin or resin compound is one of resins including at least polyethersulfone, polysulfone and polyetherimide, or a resin compound including one of these resins and an inorganic filler or carbon fiber, and wherein the thermosetting resin or resin compound is epoxy resin or epoxy resin compound including silica powder.

The fifth invention provides a plastic optical alignment sleeve for conversion connector according to the second invention, wherein the joint part of the plastic sleeve is shaped like a truncated hollow cone whose angle of elevation as seen from the small-diameter thick hollow cylinder is in a range of between 30 degrees and 75 degrees, and the thickness of the joint part is in a range of between approximately 0.2 mm and 0.7 mm.

The sixth invention provides a plastic optical alignment sleeve for conversion connector according to the second invention, wherein the noncrystalline thermoplastic resin or resin compound is one of resins including at least polyethersulfone, polysulfone and polyetherimide, or a resin compound including one of these resins and an inorganic filler or carbon fiber, and wherein the thermosetting resin or resin compound is epoxy resin or epoxy resin compound including silica powder.

The seventh invention provides a plastic optical alignment sleeve for conversion connector according to the third invention, wherein the noncrystalline thermoplastic resin or resin compound is one of resins including at least polyethersulfone, polysulfone and polyetherimide, or a resin compound including one of these resins and an inorganic filler or carbon fiber, and wherein the thermosetting resin or resin compound is epoxy resin or epoxy resin compound including silica powder.

The eighth invention provides a plastic optical alignment sleeve for conversion connector according to the fifth invention, wherein the noncrystalline thermoplastic resin or resin compound is one of resins including at least polyethersulfone, polysulfone and polyetherimide, or a resin compound including one of these resins and an inorganic filler or carbon fiber, and wherein the thermosetting resin or resin compound is epoxy resin or epoxy resin compound including silica powder.

The ninth invention provides a plastic optical alignment sleeve for conversion connector, which is installed in an adapter used to connect optical fiber cords each having optical fibers inserted therein and which optically connects the optical fibers by inserting ferrules with different outer diameters attached to free ends of the optical fiber cords into the sleeve from its left and right ends, the plastic optical alignment sleeve in its basic geometry comprising: left and right thick hollow cylinders differing from each other in inner diameter and thickness; and a joint part formed at an intermediate portion of the sleeve for connecting the left and right thick hollow cylinders with different dimensions; wherein the plastic sleeve is formed of a noncrystalline thermoplastic resin or thermosetting resin or of a resin compound; wherein the left and right thick hollow cylinders have inner surfaces of the same cylindrical shape as their outer surfaces or a polygonal prism shape enclosed by straight lines, and also have at least three planes on the inner surface side that contact the ferrule; wherein a diameter (d) of a virtual cylinder connecting those points at which the inner surface contacts the ferrule is smaller than an outer diameter of the ferrule.

The tenth invention provides a plastic optical alignment sleeve for conversion connector according to the ninth invention, wherein the diameter (d) of the virtual cylinder connecting those points on one of the thick hollow cylinders that contact the ferrule is in a range of between approximately 1.246 mm and 1.248 mm and the thickness of the thinnest part of the virtual cylinder is in a range of between approximately 0.2 mm and 0.3 mm, and wherein the diameter (d) of the virtual cylinder connecting those points on the other thick hollow cylinder that contact the ferrule is in a range of between approximately 2.490 mm and 2.498 mm and the thickness of the thinnest part of the virtual cylinder is in a range of between approximately 0.3 mm and 0.8 mm.

The eleventh invention provides a plastic optical alignment sleeve for conversion connector according to the ninth invention, wherein the joint part of the plastic sleeve is shaped like a truncated hollow cone whose angle of elevation as seen from the small-diameter thick hollow cylinder is in a range of between 30 degrees and 75 degrees, and the thickness of the thinnest part of the joint part is in a arrange of between approximately 0.2 mm and 0.3 mm.

The twelfth invention provides a plastic optical alignment sleeve for conversion connector according to ninth invention, wherein the noncrystalline thermoplastic resin or resin compound is one of resins including at least polyethersulfone, polysulfone and polyetherimide, or a resin compound including one of these resins and an inorganic filler or carbon fiber, and wherein the thermosetting resin or resin compound is epoxy resin or epoxy resin compound including silica powder.

The thirteenth invention provides a plastic optical alignment sleeve for conversion connector according to the tenth invention, wherein the joint part of the plastic sleeve is shaped like a truncated hollow cone whose angle of elevation as seen from the small-diameter thick hollow cylinder is in a range of between 30 degrees and 75 degrees, and the thickness of the thinnest part of the joint part is in a arrange of between approximately 0.2 mm and 0.3 mm.

The fourteenth invention provides a plastic optical alignment sleeve for conversion connector according to the tenth invention, wherein the noncrystalline thermoplastic resin or resin compound is one of resins including at least polyethersulfone, polysulfone and polyetherimide, or a resin compound including one of these resins and an inorganic filler or carbon fiber, and wherein the thermosetting resin or resin compound is epoxy resin or epoxy resin compound including silica powder.

The fifteenth invention provides a plastic optical alignment sleeve for conversion connector according to the eleventh invention, wherein the noncrystalline thermoplastic resin or resin compound is one of resins including at least polyethersulfone, polysulfone and polyetherimide, or a resin compound including one of these resins and an inorganic filler or carbon fiber, and wherein the thermosetting resin or resin compound is epoxy resin or epoxy resin compound including silica powder.

The sixteenth invention provides a plastic optical alignment sleeve for conversion connector according to the thirteenth invention, wherein the noncrystalline thermoplastic resin or resin compound is one of resins including at least polyethersulfone, polysulfone and polyetherimide, or a resin compound including one of these resins and an inorganic filler or carbon fiber, and wherein the thermosetting resin or resin compound is epoxy resin or epoxy resin compound including silica powder.

This invention has the advantage of being able to provide a plastic sleeve for conversion connector with excellent connection characteristic, reliability and cost-effectiveness, which can be used to connect optical fiber cords having single-mode optical fibers inserted therein and including ferrules of different outer diameters.

The above and other objects, features and advantages of the present invention will become more apparent from the following description of embodiments thereof taken in conjunction with the accompanying drawings.
Fig. 1 is a schematic view showing ferrules joined together in a conventional split sleeve;
Fig. 2 is a perspective view of the conventional split sleeve;
Fig. 3 is a schematic view showing ferrules of different diameters joined together in a conventional split sleeve for conversion connector;
Fig. 4 is a perspective view of the conventional split sleeve for conversion connector;
Fig. 5 is an external side view of a plastic optical alignment split sleeve for conversion connector according to the invention;
Fig. 6 is a vertical cross section showing an inner structure of Fig. 5;
Fig. 7 is a diagram showing a relation between a gauge retention force and a sleeve inner diameter and thickness when SC-type ferrules are inserted into the plastic optical alignment split sleeve for conversion connector;
Fig. 8 is a diagram showing a relation between a gauge retention force and a sleeve inner diameter and thickness when MU-type ferrules are inserted into the plastic optical alignment split sleeve for conversion connector;
Fig. 9 is a diagram showing a relation between a maximum stress occurring in the split sleeve for conversion connector and an angle of elevation of the joint part when SC- and MU-type ferrules are inserted into the split sleeve for conversion connector;
Fig. 10 is a graph showing an insertion loss characteristic of the plastic optical alignment split sleeve for conversion connector obtained in the embodiment 1;
Fig. 11 is a graph showing a return loss characteristic of the plastic optical alignment split sleeve for conversion connector obtained in the embodiment 1;
Fig. 12 is a graph showing a result of an attachment/detachment test on the conversion connector in the embodiment 1;
Fig. 13 is a graph showing a result of a vibration test on the conversion connector in the embodiment 1;
Fig. 14 is a graph showing a result of an impact test on the conversion connector in the embodiment 1;
Fig. 15 is a graph showing a result of temperature-humidity cycling test on the conversion connector in the embodiment 1;
Fig. 16 is a graph showing a result of temperature cycling test on the conversion connector in the embodiment 1;
Fig. 17 is a graph showing a high temperature storage test on the conversion connector in the embodiment 1;
Fig. 18 is a graph showing a low temperature storage test on the conversion connector in the embodiment 1;
Fig. 19 is a perspective view of a plastic optical alignment tubular sleeve for conversion connector according to this invention;
Fig. 20 is a diagram showing a relation between a gauge retention force and a sleeve inner diameter and thickness when SC-type ferrules are inserted into the plastic optical alignment tubular sleeve for conversion connector;
Fig. 21 is a diagram showing a relation between a gauge retention force and a sleeve inner diameter and thickness when MU-type ferrules are inserted into the plastic optical alignment tubular sleeve for conversion connector;
Fig. 22 is a diagram showing a relation between a maximum stress occurring in the plastic tubular sleeve for conversion connector and an angle of elevation of the joint part when SC- and MU-type ferrules are inserted into the tubular sleeve for conversion connector;
Fig. 23 is an example of cross section of the plastic optical alignment tubular sleeve for conversion connector according to the invention;
Fig. 24 is another example of cross section of the plastic optical alignment tubular sleeve for conversion connector according to the invention;
Fig. 25 is still another example of cross section of the plastic optical alignment tubular sleeve for conversion connector according to the invention;
Fig. 26 shows an interior of the plastic optical alignment tubular sleeve for conversion connector according to the invention;
Fig. 27 is a graph showing an insertion loss characteristic of the plastic optical alignment tubular sleeve in the embodiment 6; and
Fig. 28 is a graph showing a return loss characteristic of the plastic optical alignment tubular sleeve in the embodiment 6.

Having studied the conventional methods and their problems in detail, the inventors of this invention have accomplished the invention in the following process.

### (1) Selection of Molding Material: In the molding technology the selection of a molding material constitutes the most important task.

Plastic materials that can be used instead of metals or ceramic materials are normally called engineering plastics and a variety of such materials have been developed until recently. Our studies on various engineering plastics have shown that, in producing a resin or resin compound that meets the mechanical strength, creep resistance, dimensional stability against temperature and humidity variations, and precision moldability required by the invention, it is important to use noncrystalline resin as a basic compound. Appropriate resins include, for example, polyethersulfone (PES), polysulfone (PS) and polyetherimide (PEI). This is because crystal resins have been observed to have a problem that deformation after molding and stress relaxation over a long period of time are at levels that cannot be neglected.

These resins are classified as so-called thermoplastic resins and become liquefied from the solid state when heated above their melting points. In this state the resins are flowed into a mold to solidify, thus producing a molded product.

There is another type of resin, called a thermosetting resin, which, in a heated state, does not polymerize and remains completely liquefied. This resin is flowed into a mold and heated for a predetermined period of time to cause a crosslink reaction, thus producing a molded product. It has been found that among these thermosetting resins, an epoxy resin is an appropriate choice for producing a resin or resin compound that can satisfy the mechanical strength, creep resistance, dimensional stability against temperature and humidity variations, and precision moldability required by the invention.

Among commonly known additives as inorganic fillers for use in the resin of this invention are glass fibers, potassium titanate whiskers, zinc oxide and glass beads. Other known inorganic additives include carbon fibers, graphite, Teflon beads, silica powder and barium titanate. The inventors has found that, of these additives, at least inorganic fillers such as potassium titanate whiskers and zinc oxide or carbon fibers need to be added to the thermoplastic resin and at least silica powder to the thermosetting resin in realizing this invention.

The amount of additive is determined in a range that does not deteriorate the precision moldability of the resin. It may be selected in the range of 20% to 70% or more preferably 30% to 60%.

It is also possible to add surface treating agents and coloring agents for the additives, as required.

### (2) Selection of Inner Diameter and Thickness of Split Sleeve

The plastic optical alignment split sleeve for conversion connector of this invention that aligns ferrules of different diameters has the construction in which left and right thick hollow cylindrical sleeves with different inner diameters and different thicknesses are connected at the central joint part.

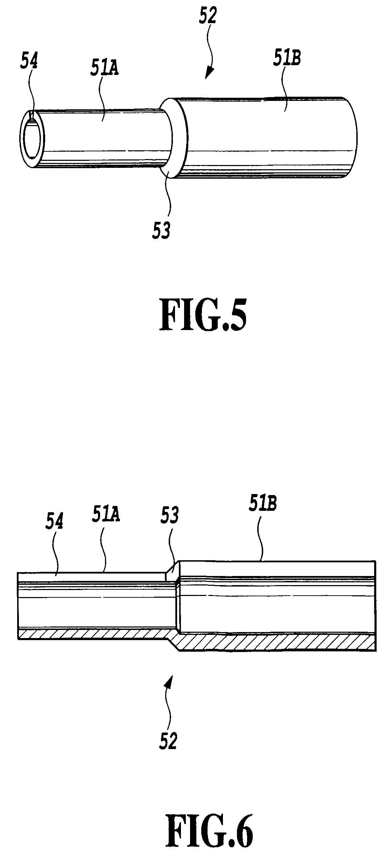

Fig. 5 shows an external view of the plastic optical alignment split sleeve for conversion connector of this invention and Fig. 6 shows its inner structure. In this split sleeve 52, a cylindrical sleeve for an MU-type ferrule 51A formed of a small-diameter thick hollow cylinder and a cylindrical sleeve for an SC-type ferrule 51B formed of a thick hollow cylinder larger in diameter than the former are joined together at a joint part 53, with a cut or slit 54 extending through the left and right thick hollow cylinders and the joint part 53.

The SC-type ferrule 2.499 mm in outer diameter has an allowable gauge retention force of 0.2-0.6 kgf whereas the MU-type small-diameter ferrule 1.249 mm in outer diameter has an allowable gauge retention force of 0.1-0.25 kgf, smaller than that of the SC-type ferrule.

The gauge retention force of the slit sleeve is determined by the inner diameter and thickness. Hence, to maintain high reliability of the split sleeve in the conversion connector requires controlling the inner diameter and thickness of the cylindrical sleeves, into which ferrules are inserted, to appropriate values to realize a proper gauge retention force required of each ferrule.

When ferrules are inserted into the plastic optical alignment split sleeve, the split sleeve elastically deforms causing a stress in the sleeve. Multiplying this stress with a friction coefficient of the material can determine the gauge retention force. First, consider a case in which an SC-type ferrule 2.499 mm in outer diameter is inserted into plastic split sleeves with a variety of inner diameters.

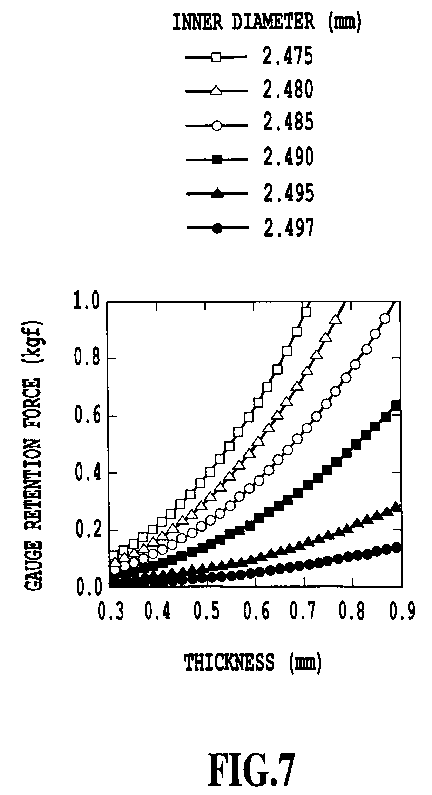

The relation between the gauge retention force produced and the thickness of the plastic split sleeve is shown in Fig. 7. The allowable gauge retention force of the SC-type ferrule is in the range of between 0.2 kgf and 0.6 kgf. From Fig. 7 it is seen that the plastic split sleeve that meets this requirement needs to have an inner diameter of approximately 2.475 mm to 2.497 mm and a thickness of about 0.4 mm to 0.8 mm.

Next, consider a case where an MU-type ferrule 1.249 mm in outer diameter is inserted into plastic split sleeves with a variety of inner diameters.

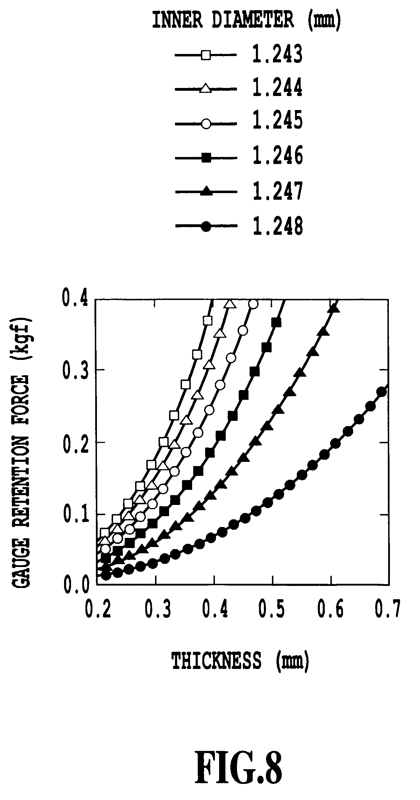

The relation between the gauge retention force generated and the thickness of the plastic split sleeve is shown in Fig. 8. The allowable gauge retention force of the MU-type ferrule is in the range of 0.1-0.25 kgf. From Fig. 8 it is seen that the plastic split sleeve that meets this requirement needs to have an inner diameter of approximately 1.243 mm to 1.248 mm and a thickness of about 0.2 mm to 0.7 mm.

The plastic optical alignment split sleeve for conversion connector of this invention that aligns ferrules of different diameters is made by selecting an appropriate range of inner diameter and thickness described above and combining left and right thick hollow cylindrical sleeves 51A, 51B with different inner diameters and different thicknesses.

It is a prerequisite that the left and right cylindrical sleeves 51A, 51B with the slit 54 are coaxial. Considering a difference in the amount of material deformation, however, it is possible to deliberately shift the center axes of the left and right cylindrical sleeves 51A, 51B from each other.

### (3) Structure of Joint Part

The structure of the joint part 53, which is situated at an intermediate portion of the plastic optical alignment split sleeve 52 for conversion connector of the invention and which connects the left and right thick hollow cylindrical sleeves 51A, 51B with different dimensions, is very important in securing a good connection between different-diameter ferrules.

The joint part 53 for joining the left and right cylindrical sleeves 51A, 51B with different inner diameters and different thicknesses begins at the end of the left small-diameter cylindrical sleeve 51A in Fig. 6 and expands in diameter along a slope as it extends over a predetermined length toward the right large-diameter cylindrical sleeve 51B and then merges with it. The joint part 53 has the same thickness as the small-diameter cylindrical sleeve 51A, in the range of about 0.2 mm to 0.7 mm.

The magnitude of slope of the joint part 53 is related with the stress that is generated in the plastic split sleeve 52 when different-diameter ferrules are inserted.

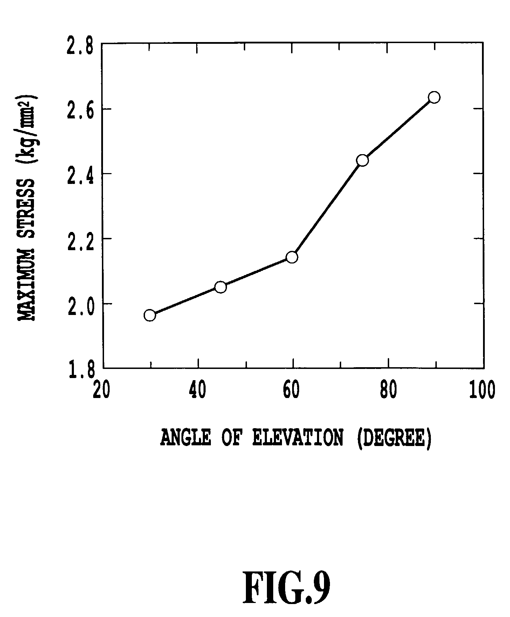

Inside the plastic split sleeve 52 for conversion connector, the different-diameter ferrules are joined at the end of the cylindrical sleeve 51B of a larger inner diameter. The stress that occurs in the plastic split sleeve 52 is large in a portion of the large-inner-diameter cylindrical sleeve 51B opposite the-slit 54, and becomes maximum at the end of the sleeve 51B near the connecting point. The relation between the maximum stress occurring in the plastic split sleeve 52 and the angle of elevation of the joint part 53 as seen from the small-diameter cylindrical sleeve 51A is shown in Fig. 9.

From Fig. 9 it is understood that the maximum stress decreases as the angle of elevation decreases. Applying an excessively large stress continuously is not desirable considering a resulting creep. However, setting too small an angle of elevation results in a longer joint part 53 and therefore an increased dimension of the conversion connector, which is not desirable. Therefore, the angle of elevation of the joint part 53 as seen from the small-diameter cylindrical sleeve 51A should be set in the range of 30-75 degrees, or preferably 45-60 degrees.

With the above construction, it is possible to provide the joint part 53 with a sufficient thickness and guarantee the mechanical strength and creep resistance required by this invention.

In the following, we will describe preferred embodiments that exhibit advantageous characteristics unique to the invention. It should be noted, however, that the invention is not limited to these embodiments.

### [Embodiment 1]

First, the following resin compounds were prepared.
Cresol novolak type epoxy resin: 100 parts by weight Phenol novolak type curing agent: 100 parts by weight Silica powder (average particle diameter 10 µm): 500 parts by weight

The flexural modulus of this resin compound was 2,100 kg/mm² in ASTM standard. The anisotropy of the resin was evaluated by the ratio of mold shrinkage factors in the direction along the flow of the resin and the direction at right angles thereto and found to be as low as 1.0. The resin compound formed in this manner was injection-molded into a plastic optical alignment split sleeve 52 for conversion connector shaped as shown in Figs. 5 and 6 with the dimensions of Table 1.

**[Table 1]**

| Dimensions of the split sleeve for conversion connector in embodiment 1 | |
|---|---|
| Item | Dimensional tolerance |
| Cylindrical sleeve for SC ferrule | |
| Inner diameter | 2.495 ± 0.001 mm |
| Thickness | 0.760 ± 0.005 mm |
| Length | 5.7 ± 0.005 mm |
| Cylindrical sleeve for MU ferrule | |
| Inner diameter | 1.246 ± 0.001 mm |
| Thickness | 0.400 ± 0.005 mm |
| Length | 2.9 ± 0.005 mm |
| Length of joint part | 0.5 ± 0.005 mm |
| Angle of elevation of joint part | 60° |

The conditions of injection molding were as shown in Table 2. The inner diameter error, thickness error and roundness error of the moldings are all within 1 µm and the smoothness of the inner surface was within ±0.1 µm.

**[Table 2]**

| Conditions of injection molding | | |
|---|---|---|
| Item | | Conditions |
| Drying of resin | | Stored at room temperature in dry atmosphere |
| Cylinder | Rear portion | 35°C |
| temperature | Intermediate portion | 50°C |
| | Nozzle portion | 860°C |
| Mold temperature | | 180°C |
| Injection pressure | | 400 kg/cm² |
| Screw backpressure | | 80 kg/cm² |
| Retention pressure | | 500 kg/cm² |
| Injection rate | | 20 mm/sec |
| Cycling time | | 60 seconds |

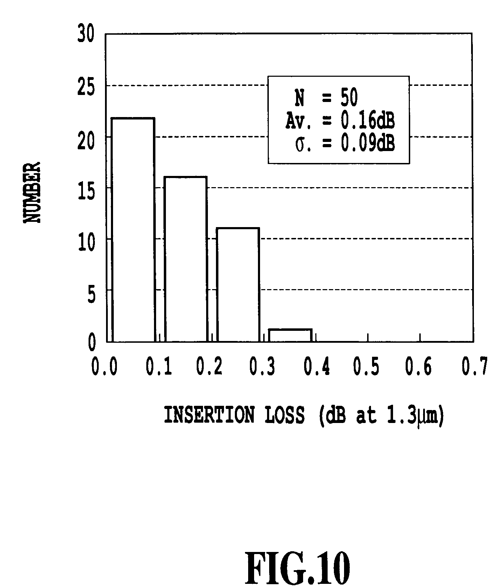

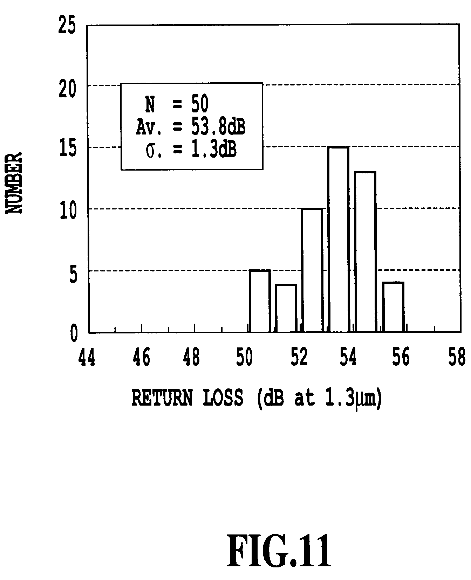

The measured gauge retention forces of the split sleeve for the SC-type ferrule and MU-type ferrule were 0.31 kgf and 0.12 kgf, respectively. The plastic optical alignment split sleeve 52 manufactured in this manner was assembled into a conversion connector, into which the SC- and MU-type ferrules of zirconia were inserted to measure the insertion loss and the return loss. The end faces of the ferrules were polished under the advanced physical contact (AdPC) polishing conditions. The results are shown in Figs. 10 and 11, which are satisfactory characteristics for the connection of single-mode optical fibers.

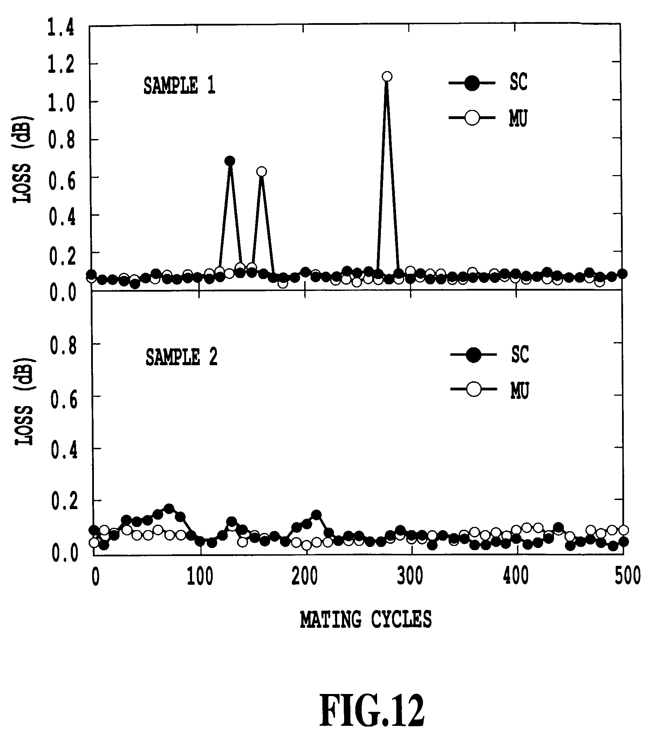

Fig. 12 shows the result of a test in which the zirconia ferrules were repetitively attached and detached to and from the MU and SC sides of the conversion connector. In Fig. 12 closed circles represent the attaching/detaching on the SC side and open circles the attaching/detaching on the MU side. In the test where 500 attaching/detaching operations were conducted, a change of loss occurred in only two or fewer operations. This means that the connector has a performance identical with those of the currently used SC- and MU-type adapters.

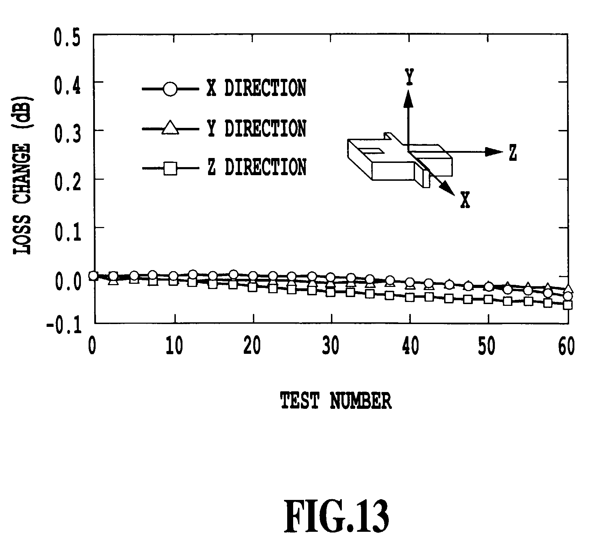

Fig. 13 shows the result of a vibration test of the conversion connector. The test conditions are as follows.
- Sweep frequency range: 10-55 Hz
- Amplitude of sine wave: 0.75 mm
- Sweeping time: 2 minutes/cycle

During the 60 cycles in the test, changes in the loss of X, Y and Z directions were about 0.05 dB, which is well within the targeted range of characteristics for the conversion connector. No changes were observed in the return loss.

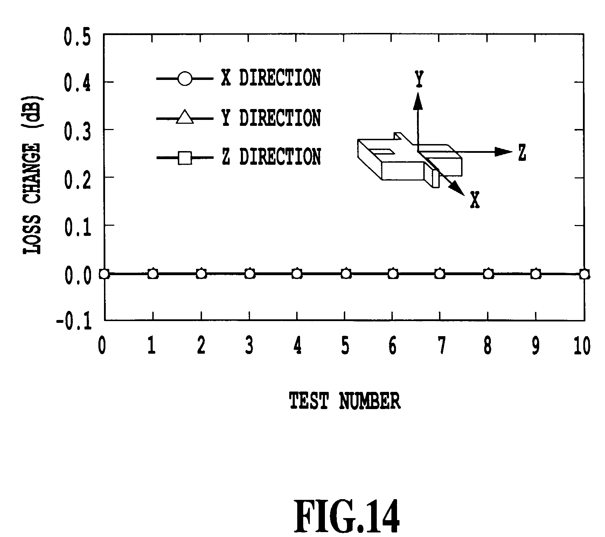

Fig. 14 shows the result of an impact test on the conversion connector. The test conditions were as follows.
- Impact peak value: 100 G
- Sine half-wave application time: 6 ms
- Number of tests: 10 times

In the 10 tests, no loss changes were observed in the X, Y and Z directions, which satisfies the target characteristic for the converter connector. Neither a change in the return loss was observed.

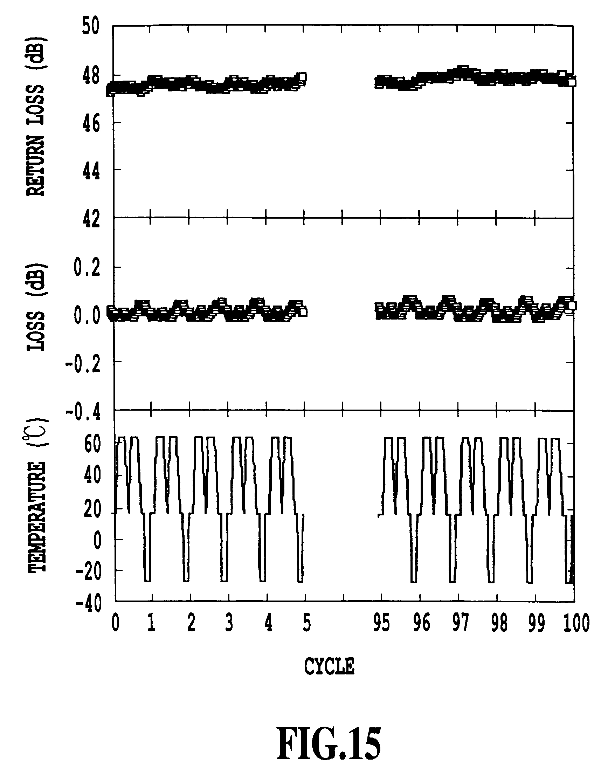

Fig. 15 shows the result of a temperature-humidity cycling test on the conversion connector. The test conditions were as follows.
- Temperature: -10°C to 20°C to 65°C
- Relative humidity: 93%
- Cycle time: 24 hours/cycle
- Number of cycles: 20 cycles

Fig. 15 shows the results of the first five cycles and the last five cycles. In the 20 cycles of the test, a loss change was about 0.1 dB and there was almost no change in the return loss, which satisfies the target characteristic of the conversion connector.

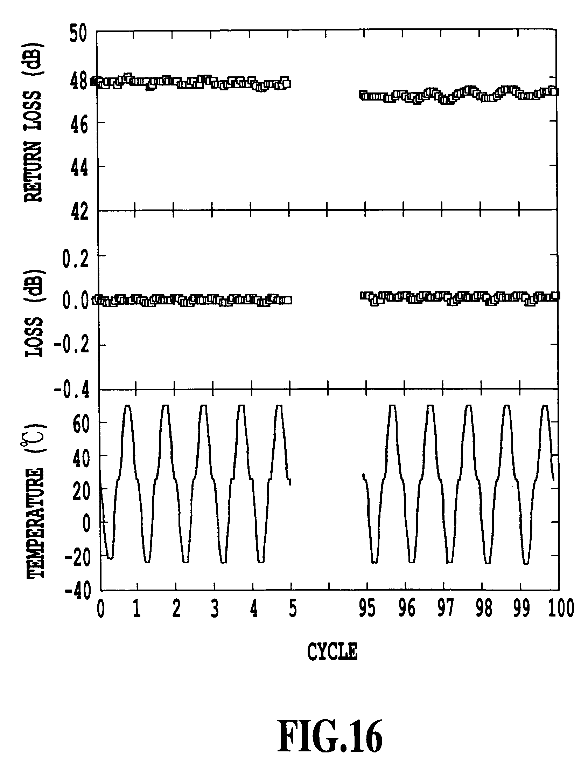

Fig. 16 shows the result of a temperature cycling test on the conversion connector. The test conditions were as follows.
- Temperature: -25°C to 25°C to 70°C
- Cycle time: 3.5 hours/cycle
- Number of cycles: 100 cycles

Fig. 16 shows the result of the first five cycles and the last five cycles. In the 100 cycles of the test, a loss change was as small as 0.05 dB and a change in the return loss was very small, which satisfies the target characteristic of the conversion connector.

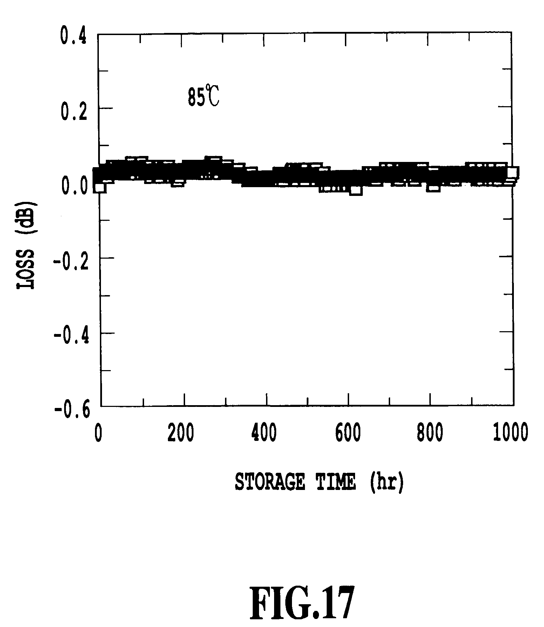

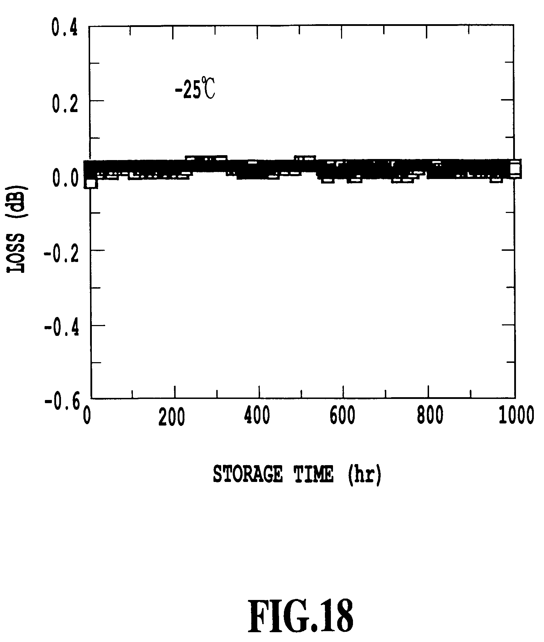

Figs. 17 and 18 show the results of a high temperature (85°C) storage test and a low temperature (-25°C) storage test on the conversion connector. At either temperature, a loss change was about 0.05 dB when the connector was stored for 1,000 hours, which satisfies the target characteristic of the conversion connector.

These results of the reliability tests are tabulated in Table 3. Under any of the test conditions it is seen that the target characteristics of the conversion connector are met.

**[Table 3]**

| Reliability test results | | | | |
|---|---|---|---|---|
| Evaluation item | | Test condition | Target characteristic | Test result |
| Mechanical tests | Repetitive attachment/ detachment | 500 times | | |
| | Vibration | 10 to 55 Hz | | |
| | | Amplitude: 1.5 mm | ΔLᵢ<0.2dB | ΔLᵢ<0.2dB |
| | | 2 min/cycle | Lᵣ>40dB | Lᵣ>40dB |
| | | 60 cycles x 3 | | |
| | | directions | | |
| | Impact | 100 G | | |
| | | Application time: | | |
| | | 6 ms | | |
| | | 10 times x 3 | | |
| | | directions | | |
| Environmental tests | Temperature | -10 to 65°C | | |
| | -humidity | 93% RH | | |
| | cycling | 24 h/cycle | | |
| | | 20 cycles | | |
| | Temperature | -25 to 70°C | ΔLᵢ<0.2dB | ΔLᵢ<0.2dB |
| | cycling | 3.5 h/cycle | Lᵣ>40dB | Lᵣ>40dB |
| | | 100 cycles | | |
| | High | 85°C | | |
| | temperature | 960 hours | | |
| | storage | | | |
| | Low | -25°C | | |
| | temperature | 960 hours | | |
| | storage | | | |
| ΔLᵢ: Variation of insertion loss | | | | |
| Lᵣ: Return loss | | | | |

### [Embodiment 2]

The following resin compounds were prepared.

| | |
|---|---|
| Polyethersulfone | 100 parts by weight |
| Inorganic filler | 100 parts by weight |

The flexural modulus of this resin compound was 800 kg/mm² in ASTM standard. The resin compound formed in this manner was injection-molded into a plastic optical alignment split sleeve 52 for conversion connector shaped as shown in Figs. 5 and 6 with the dimensions of Table 4.

**[Table 4]**

| Dimensions of the plastic split sleeve for conversion connector in embodiment 2 | |
|---|---|
| Item | Dimensional tolerance |
| Cylindrical sleeve for SC ferrule | |
| Inner diameter | 2.483±0.001 mm |
| Thickness | 0.769±0.005 mm |
| Length | 5.7±0.005 mm |
| Cylindrical sleeve for MU ferrule | |
| Inner diameter | 1.244±0.001 mm |
| Thickness | 0.670±0.005 mm |
| Length | 2.9±0.005 mm |
| Length of joint part | 0.5±0.005 mm |
| Angle of elevation of joint part | 60° |

The conditions of injection molding were as shown in Table 5. The inner diameter error, thickness error and roundness error of the moldings are all within 1 µm and the smoothness of the inner surface was within ±0.5 µm.

**[Table 5]**

| Conditions of injection molding | | |
|---|---|---|
| Item | | Conditions |
| Drying of resin | | 160°C, 5 hours |
| Cylinder | Rear portion | 360°C |
| temperature | Intermediate portion | 370°C |
| | Nozzle portion | 375°C |
| Mold temperature | | 160°C |
| Injection pressure Screw backpressure Retention pressure | | 1,200 kg/cm² |
| | | 60 kg/cm² |
| | | 500 kg/cm² |
| Injection rate | | 50 mm/sec |
| Cycling time | | 30 seconds |

The measured gauge retention forces of the split sleeve for the SC-type ferrule and MU-type ferrule were 0.24 kgf and 0.10 kgf, respectively. The plastic optical alignment split sleeve manufactured in this manner was assembled into a conversion connector, into which the SC- and MU-type ferrules of zirconia were inserted to measure the insertion loss and the return loss. As shown in Table 6, the connection characteristic of the single-mode optical fibers was within 0.2 dB on average and the return loss was higher than 50 dB. These results are satisfactory for the characteristics of the single-mode optical fibers.

The results of various reliability tests are shown in Table 6. They satisfy the target characteristics of the conversion connector, as in the embodiment 1.

**[Table 6]**

| Results of Embodiments 2 to 5 | | | | |
|---|---|---|---|---|
| Evaluation item | Embodiment 2 | Embodiment 3 | Embodiment 4 | Embodiment 5 |
| Insertion loss | 0.18±0.1dB | 0.16±0.1dB | 0.17±0.1dB | 0.18±0.1dB |
| Return loss | 52±2dB | 54±2dB | 53±2dB | 52±2dB |
| Repetitive attaching/ detaching | ΔLᵢ<0.2dB Lᵣ>40dB | ΔLᵢ<0.2dB Lᵣ>40dB | ΔLᵢ<0.2dB Lᵣ>40dB | ΔLᵢ<0.2dB Lᵣ>40dB |
| Vibration/ impact test | | | | |
| Temperature- | ΔLᵢ<0.2dB | ΔLᵢ<0.2dB | ΔLᵢ<0.2dB | ΔLᵢ<0.2dB |
| humidity cycle | Lᵣ>40dB | Lᵣ>40dB | Lᵣ>40dB | Lᵣ>40dB |
| Temperature cycle | ΔLᵢ<0.2dB Lᵣ>40dB | ΔLᵢ<0.2dB Lᵣ>40dB | ΔLᵢ<0.2dB Lᵣ>40dB | ΔLᵢ<0.2dB Lᵣ>40dB |
| High temp. storage | ΔLᵢ<0.2dB Lᵣ>40dB | ΔLᵢ<0.2dB Lᵣ>40dB | ΔLᵢ<0.2dB Lᵣ>40dB | ΔLᵢ<0.2dB Lᵣ>40dB |
| Low temp. storage | | | | |
| ΔLᵢ: Variation of insertion loss | | | | |
| Lᵣ: Return loss | | | | |

### [Embodiment 3 to 5]

Using the resin or resin compound shown in Table 7, a plastic optical alignment split sleeve was manufactured as in the embodiment 1 and 2. The inner diameter, thickness and length were set as in the embodiment 2. The gauge retention forces of the plastic optical alignment split sleeve for the SC- and MU-type ferrules were within the allowable range. As shown in Table 6, the connection characteristics of the single-mode optical fibers are at the same level as the embodiment 1 and 2. In various reliability tests, the necessary characteristics of the conversion connector were satisfied.

**[Table 7]**

| Resin and resin compound and their characteristics in embodiment 3 to 5 | | | |
|---|---|---|---|
| Embodiment | Resin | Additive | flexural modulus |
| 3 | Polyethersulfone | Carbon fiber 20% | 800 kgf/mm² |
| 4 | Polyetherimide | Inorganic filler 40% | 1,200 kgf/mm² |
| 5 | Polysulfone | Inorganic filler 30% | 600 kgf/mm² |

### [Example 1 to 5 for Comparison]

Using the resin of the embodiment 1, plastic optical alignment split sleeves for conversion connectors, which were out of an appropriate range as shown in Table 8, were fabricated by changing the inner diameter and thickness of the cylindrical sleeve for the SC-type ferrule and the cylindrical sleeve for the MU-type small-diameter ferrule. The plastic optical alignment split sleeves manufactured in this manner were assembled into conversion connectors and measurements were made of insertion loss and return loss, and insertion loss variations and return loss in various reliability tests. The results of measurements are shown in Table 8. In either of these samples, the insertion loss and return loss, or loss variations in the reliability tests were higher than the target values, indicating that the desirable characteristics as found in the embodiment 1 to 5 could not be realized.

**[Table 8]**

| Results of Comparison Example 1 to 5 | | | | | |
|---|---|---|---|---|---|
| Evaluation Item | Example 1 | Example 2 | Example 3 | Example 4 | Example 5 |
| SC inner dia. | 2.470 mm | 2.490 mm | 2.493 mm | 2.489 mm | 2.496 mm |
| SC thickness | 0.760 mm | 0.320 mm | 0.950 mm | 0.730 mm | 0.762 mm |
| MU inner dia. | 1.246 mm | 1.245 mm | 1.244 mm | 1.235 mm | 1.245 mm |
| MU thickness | 0.502 mm | 0.489 mm | 0.380 mm | 0.604 mm | 0.107 mm |
| Insertion loss | 0.87±0.1dB | 1.46±0.2dB | 0.95±0.3dB | 0.61±0.4dB | 1.58±0.5dB |
| Return loss | 43±2dB | 50±2dB | 41±2dB | 44±2dB | 48±2dB |
| Repetitive attaching/ deteching | ΔLᵢ<0.2dB Lᵣ>40dB | ΔLᵢ<0.2dB Lᵣ>40dB | ΔLᵢ<0.2dB Lᵣ>40dB | ΔLᵢ<0.2dB Lᵣ>40dB | ΔLᵢ<0.2dB Lᵣ>40dB |
| Vibration/ impact test | | | | | |
| Temp.-humidity cycling | ΔLᵢ<0.2dB Lᵣ>40dB | ΔLᵢ=0.3dB Lᵣ>40dB | ΔLᵢ<0.2dB Lᵣ>40dB | ΔLᵢ<0.2dB Lᵣ>40dB | ΔLᵢ<0.2dB Lᵣ>40dB |
| Temp. cycling | ΔLᵢ=0.3dB Lᵣ>40dB | ΔLᵢ=0.5dB Lᵣ>40dB | ΔLᵢ=0.3dB Lᵣ>40dB | ΔLᵢ=0.6dB Lᵣ>40dB | ΔLᵢ=0.4dB Lᵣ>40dB |
| High temp. storage | ΔLᵢ=0.5dB Lᵣ>40dB | ΔLᵢ<0.2dB Lᵣ>40dB | ΔLᵢ<0.2dB Lᵣ>40dB | ΔLᵢ<0.2dB Lᵣ>40dB | ΔLᵢ<0.2dB Lᵣ>40dB |
| Low temp. storage | | | | | |
| ΔLᵢ: Variation of insertion loss | | | | | |
| Lᵣ: Return loss | | | | | |

### (4) Selection of Inner Diameter and Thickness of Tubular Sleeve

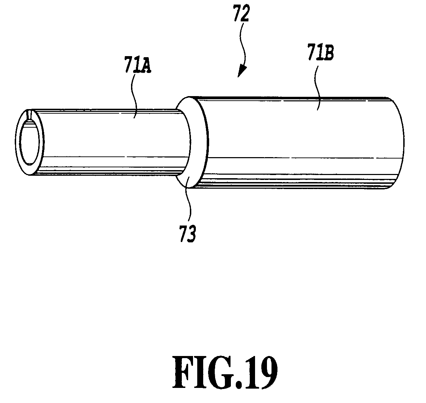

The plastic optical alignment tubular sleeve of this invention that aligns ferrules of different diameters has the construction in which left and right thick hollow cylindrical sleeves with different inner diameters and different thicknesses are joined at the central joint part. Fig. 19 shows an external view of the plastic optical alignment tubular sleeve 72 for conversion connectors of this invention. In this tubular sleeve 72, a cylindrical sleeve for an MU-type ferrule 71A formed of a small-diameter thick hollow cylinder and a cylindrical sleeve for an SC-type ferrule 71B formed of a thick hollow cylinder larger in diameter than the former are joined together at a joint part 73.

The SC-type ferrule 2.499 mm in outer diameter has an allowable gauge retention force of 0.2-0.6 kgf whereas the MU-type small-diameter ferrule 1.249 mm in outer diameter has an allowable gauge retention force of 0.1-0.25 kgf, smaller than that of the SC-type ferrule.

The gauge retention force of the tubular sleeve is determined by the inner diameter and thickness. Hence, to maintain high reliability of the plastic optical alignment tubular sleeve in the conversion connector requires controlling the inner diameter and thickness of the cylindrical sleeves, into which ferrules are inserted, to appropriate values to realize a proper gauge retention force required of each ferrule.

When ferrules are inserted into the plastic optical alignment tubular sleeve, the tubular sleeve elastically deforms causing a stress in the sleeve. Multiplying this stress with a friction coefficient of the material can determine the gauge retention force.

First, consider a case in which an SC-type ferrule 2.499 mm in outer diameter is inserted into plastic tubular sleeves with a variety of inner diameters.

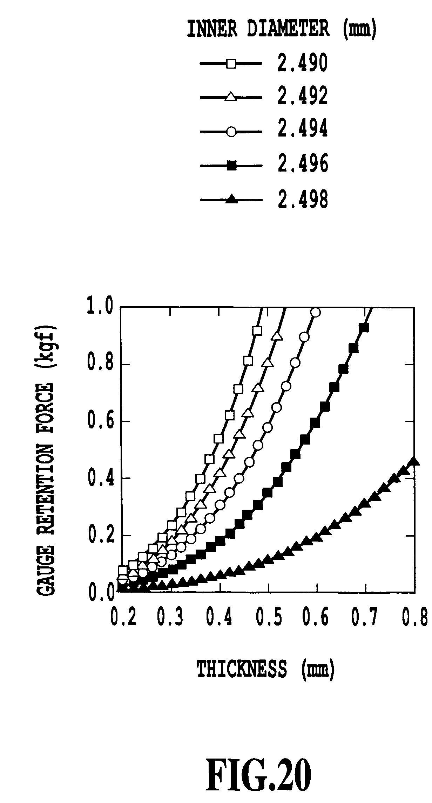

The relation between the gauge retention force produced and the thickness of the plastic tubular sleeve is shown in Fig. 20. The allowable gauge retention force of the SC-type ferrule is in the range of between 0.2 kgf and 0.6 kgf. From Fig. 20 it is seen that the plastic tubular sleeve that meets this requirement needs to have an inner diameter of approximately 2.490 mm to 2.498 mm and a thickness of about 0.3 mm to 0.8 mm.

Next, consider a case where an MU-type ferrule 1.249 mm in outer diameter is inserted into plastic tubular sleeves with a variety of inner diameters.

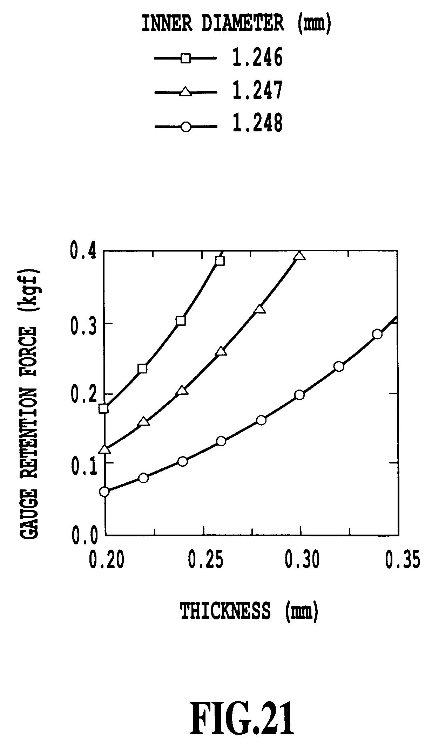

The relation between the gauge retention force generated and the thickness of the plastic tubular sleeve is shown in Fig. 21. The allowable gauge retention force of the MU-type ferrule is in the range of 0.1-0.25 kgf. From Fig. 21 it is seen that the plastic tubular sleeve that meets this requirement needs to have an inner diameter of approximately 1.246 mm to 1.248 mm and a thickness of about 0.2 mm to 0.3 mm.

The plastic optical alignment tubular sleeve for conversion connector of this invention that aligns ferrules of different diameters is made by selecting an appropriate range of inner diameter and thickness described above and combining left and right thick hollow cylindrical sleeves 71A, 71B with different inner diameters and different thicknesses. The left and right cylindrical sleeves 71A, 71B are coaxial, and their centers are aligned at the central part of the sleeve.

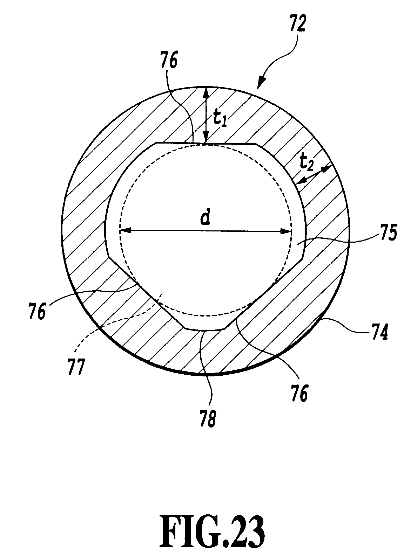

In practice, it is important to provide an air escape, as by forming a gutter in the inner surface of the plastic optical alignment tubular sleeve 72 for conversion connector along its length. For this purpose, the plastic optical alignment tubular sleeve 72 for conversion connector of this invention has a basic cross-sectional geometry, as shown in Figs. 23-25, in which there are at least three planes 76 inside that contact the ferrule, thus allowing for a precise holding of the ferrule and providing a space for air escape.

That is, in the cross section of the plastic optical alignment tubular sleeve 72 for conversion connector shown in Fig. 23, an outer circumferential surface 74 is a circumferential surface of a cylinder. Inside the outer circumferential cylinder there is a hollow space 75 extending longitudinally therethrough, into which a ferrule is inserted. The inner wall surface of the hollow space 75 has at least three planes 76.

These planes 76 are coaxial with the outer circumferential cylinder and are arranged such that the diameter d of a virtual cylinder 77 inscribed in the planes 76 is smaller than the outer diameter of the inserted ferrule. Surfaces 78 connecting the planes 76 may have a simple geometry, for example, in the form of an outer circumferential surface of a cylinder, as long as their distance from the center of the inscribing virtual cylinder 77 is set larger than the radius of the virtual cylinder 77. In this embodiment, as described above, the ferrule holding surface required to have a high precision is formed of planes 76 and the surfaces connecting these planes 76 are kept out of contact with the ferrule by making their distance from the center larger than that of the ferrule holding surface.

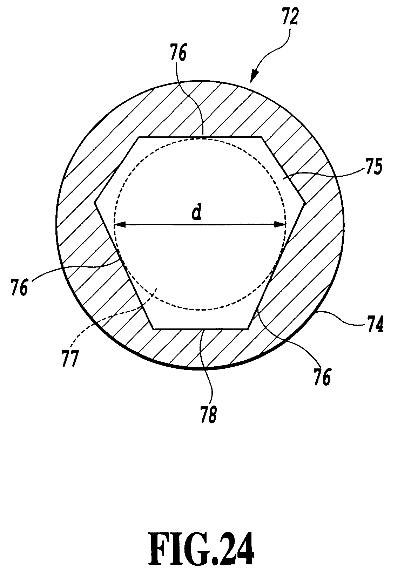

The cross section, shown in Fig. 24, of the plastic optical alignment tubular sleeve 72 for conversion connector according to this invention is similar to that of the plastic optical alignment tubular sleeve 72 for conversion connector of Fig. 23, except that the surfaces 78 connecting the three planes 76 are planar.

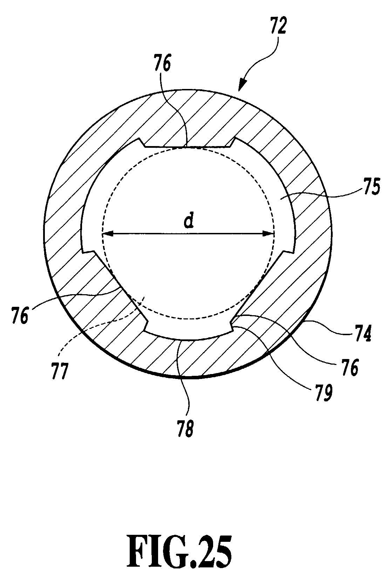

The cross section, shown in Fig. 25, of the plastic optical alignment tubular sleeve 72 for conversion connector of this invention connects the planes 76 with the cylindrical circumferential surfaces 78 as in Fig. 23, except that there are transition portions 79 at the connecting parts.

### (5) Structure of Joint Part

The structure of the joint part 73, which is situated at an intermediate portion of the plastic optical alignment tubular sleeve 72 with different dimensions, is very important in securing a good connection between different-diameter ferrules.

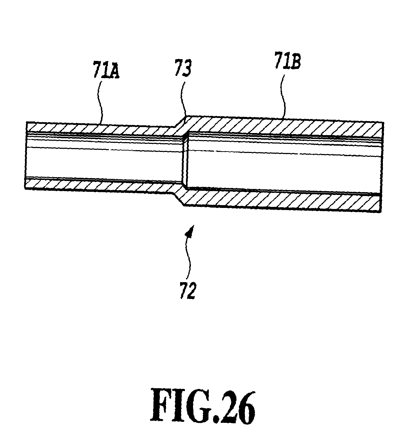

The interior of the plastic optical alignment tubular sleeve 72 for conversion connector of this invention is shown in Fig. 26.

The joint part 73 for joining the left and right cylindrical sleeves 71A, 71B with different inner diameters and different thicknesses begins at the end of the left small-diameter cylindrical sleeve 71A in Fig. 26 and expands in diameter along a slope as it extends over a predetermined length toward the right large-diameter cylindrical sleeve 71B and then merges with it. The thickness of the thinnest portion of the joint part 73 is the same as that of the small-diameter cylindrical sleeve 71A, which is in the range of about 0.2 mm to 0.3 mm.

The magnitude of slope of the joint part 73 is related with the stress that is generated in the plastic tubular sleeve 72 when different-diameter ferrules are inserted.

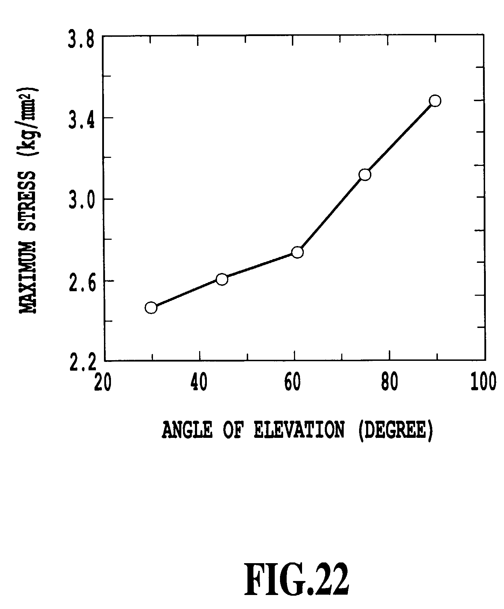

Inside the plastic tubular sleeve 72 for conversion connector, the different-diameter ferrules are joined at the end of the cylindrical sleeve 71B of a larger inner diameter. The stress that occurs in the plastic tubular sleeve 72 becomes maximum at the end of the sleeve 71B near the connecting point. The relation between the maximum stress occurring in the plastic tubular sleeve 72 and the angle of elevation of the joint part 73 as seen from the small-diameter cylindrical sleeve 71A is shown in Fig. 22.

From Fig. 22 it is understood that the maximum stress decreases as the angle of elevation decreases. Applying an excessively large stress continuously is not desirable considering a resulting creep. However, setting too small an angle of elevation results in a longer joint part 73 and therefore an increased dimension of the conversion connector, which is not desirable. Therefore, the angle of elevation of the joint part 73 as seen from the small-diameter cylindrical sleeve 71A should be set in the range of 30-75 degrees, or preferably 45-60 degrees.

With the above construction, it is possible to provide the joint part 73 with a sufficient thickness and guarantee the mechanical strength and creep resistance required by this invention.

In the following, we will describe preferred embodiments that exhibit advantageous characteristics unique to the invention. It should be noted, however, that the invention is not limited to these embodiments.

### [Embodiment 6]

First, the following resin compounds were prepared.

| | |
|---|---|
| Cresol novolak type epoxy resin | 100 parts by weight |
| Phenol novolak type curing agent | 100 parts by weight |
| Silica powder (average particle diameter 10 µm) | 500 parts by weight |

The flexural modulus of this resin compound was 2,100 kg/mm² in ASTM standard. The anisotropy of the resin was evaluated by the ratio of mold shrinkage factors in the direction along the flow of the resin and the direction at right angles thereto and found to be as low as 1.0. The resin compound formed in this manner was injection-molded into a plastic optical alignment tubular sleeve 72 for conversion connector shaped as shown in Fig. 19 with the dimensions of Table 9.

**[Table 9]**

| Dimensions of the tubular sleeve for conversion connector in embodiment 6 | |
|---|---|
| Item | Dimensional tolerance |
| Cylindrical sleeve for SC ferrule | |
| Inner diameter d | 2.496 ± 0.0005 mm |
| Thickness t₁ | 0.600 ± 0.005 mm |
| Thickness t₂ | 0.500 ± 0.005 mm |
| Length | 5.7 ± 0.005 mm |
| Cylindrical sleeve for MU ferrule | |
| Inner diameter | 1.2475 ± 0.0005 mm |
| Thickness t₁ | 0.370 ± 0.005 mm |
| Thickness t₂ | 0.270 ± 0.005 mm |
| Length | 2.9 ± 0.005 mm |
| Length of joint part | 0.5 ± 0.005 mm |
| Angle of elevation of joint part | 60° |

The conditions of injection molding were as shown in Table 10. The inner diameter error, thickness error and roundness error of the moldings are all within 1 µm and the smoothness of the inner surface was within ±0.1 µm.

**[Table 10]**

| Conditions of injection molding | | |
|---|---|---|
| Item | | Conditions |
| Drying of resin | | Stored at room temperature in dry atmosphere |
| Cylinder temperature | Rear portion | 35°C |
| | Intermediate portion | 50°C |
| | Nozzle portion | 86°C |
| Mold temperature | | 180°C |
| Injection pressure | | 400 kg/cm² |
| Screw backpressure | | 80 kg/cm² |
| Retention pressure | | 500 kg/cm² |
| Injection rate | | 20 mm/sec |
| Cycling time | | 60 seconds |

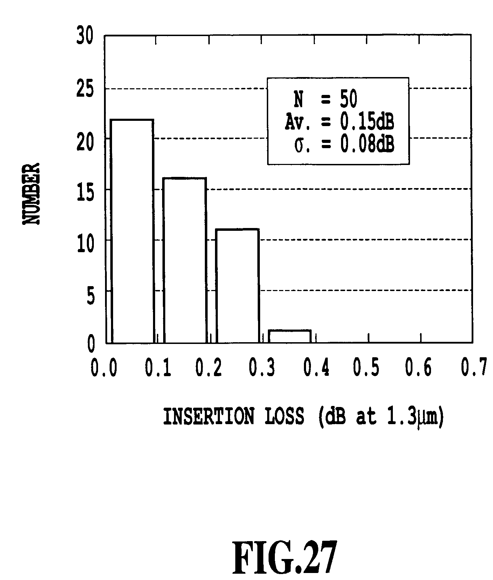

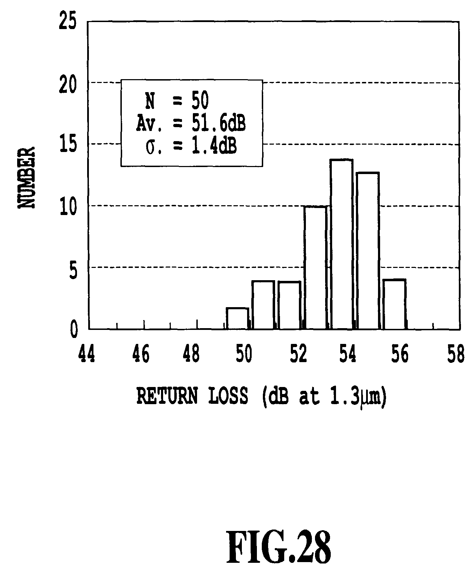

The measured gauge retention forces of the tubular sleeve for the SC-type ferrule and MU-type ferrule were 0.36 kgf and 0.14 kgf, respectively. The plastic optical alignment tubular sleeve 72 manufactured in this manner was assembled into a conversion connector, into which the SC- and MU-type ferrules of zirconia were inserted to measure the insertion loss and the return loss. The end faces of the ferrules were polished under the advanced physical contact (AdPC) polishing conditions. The results are shown in Figs. 27 and 28, which are satisfactory characteristics for the connection of single-mode optical fibers.

Results of various reliability tests are shown in Table 11. They all meet the target characteristics of the conversion connector.

**[Table 11]**

| Reliability test results | | | | |
|---|---|---|---|---|
| Evaluation item | | Test condition | Target characteristic | Test result |
| Mechanical tests | Repetitive attachment/ detachment | 500 times | ΔLᵢ<0.2dB Lᵣ>40dB | ΔLᵢ<0.2dB Lᵣ>40dB |
| | Vibration | 10 to 55 Hz | | |
| | | Amplitude: 1.5 mm | | |
| | | 2 min/cycle | | |
| | | 60 cycles x | | |
| | | 3 directions | | |
| | Impact | 100 G | | |
| | | Application time: 6 ms | | |
| | | 10 times x 3 | | |
| | | directions | | |
| Environmental tests | Temperature- humidity cycling | -10 to 65°C | ΔLᵢ<0.2dB Lᵣ>40dB | ΔLᵢ<0.2dB Lᵣ>40dB |
| | | 93% RH | | |
| | | 24 h/cycle | | |
| | | 20 cycles | | |
| | Temperature cycling | -25 to 70°C | | |
| | | 3.5 h/cycle | | |
| | | 100 cycles | | |
| | High temperature storage | 85°C | | |
| | | 960 hours | | |
| | Low temperature storage | -25°C | | |
| | | 960 hours | | |
| ΔLᵢ: Variation of insertion loss | | | | |
| Lᵣ: Return loss | | | | |

### [Embodiment 7]

The following resin compounds were prepared.

| | |
|---|---|
| Polyethersulfone | 100 parts by weight |
| Inorganic filler | 30 parts by weight |

The flexural modulus of this resin compound was 800 kg/mm² in ASTM standard. The resin compound formed in this manner was injection-molded into a plastic optical alignment tubular sleeve 72 for conversion connector shaped as shown in Fig. 19 with the dimensions of Table 12.

**[Table 12]**

| Dimensions of the tubular sleeve for conversion connector in embodiment 7 | |
|---|---|
| Item | Dimensional tolerance |
| Cylindrical sleeve for SC ferrule | |
| Inner diameter d | 2.492 ± 0.0005 mm |
| Thickness t₁ | 0.500 ± 0.005 mm |
| Thickness t₂ | 0.400 ± 0.005 mm |
| Length | 5.7 ± 0.005 mm |
| Cylindrical sleeve for MU ferrule | |
| Inner diameter | 1.248 ± 0.0005 mm |
| Thickness t₁ | 0.380 ± 0.005 mm |
| Thickness t₂ | 0.280 ± 0.005 mm |
| Length | 2.9 ± 0.005 mm |
| Length of joint part | 0.5 ± 0.005 mm |
| Angle of elevation of joint part | 60^{°} |

The conditions of injection molding were as shown in Table 13. The inner diameter error, thickness error and roundness error of the moldings are all within 1 µm and the smoothness of the inner surface was within ±0.5 µm.

**[Table 13]**

| Conditions of injection molding | | |
|---|---|---|
| Item | | Conditions |
| Drying of resin | | 160°C, 5 hours |
| Cylinder | Rear portion | 360°C |
| temperature | Intermediate portion | 370°C |
| | Nozzle portion | 375°C |
| Mold temperature | | 160°C |
| Injection pressure | | 1,200 kg/cm² |
| Screw backpressure | | 60 kg/cm² |
| Retention pressure | | 500 kg/cm² |
| Injection rate | | 50 mm/sec |
| Cycling time | | 30 seconds |

The measured gauge retention forces of the tubular sleeve for the SC-type ferrule and MU-type ferrule were 0.48 kgf and 0.16 kgf, respectively. The plastic optical alignment tubular sleeve 72 manufactured in this manner was assembled into a conversion connector, into which the SC- and MU-type ferrules of zirconia were inserted to measure the insertion loss and the return loss.

As shown in Table 14, the connection characteristic of the single-mode optical fibers was within 0.2 dB on average and the return loss was higher than 50 dB. These results are satisfactory for the characteristics of the single-mode optical fibers.

The results of various reliability tests are shown in Table 14. They satisfy the target characteristics of the conversion connector, as in the embodiment 6.

**[Table 14]**

| Results of Embodiments 7 to 10 | | | | |
|---|---|---|---|---|
| Evaluation item | Embodiment 7 | Embodiment 8 | Embodiment 9 | Embodiment 10 |
| Insertion loss | 0.17±0.1dB | 0,14±0,1dB | 0.15±0.1dB | 0.18±0,1dB |
| Return loss | 51±2dB | 50±2dB | 51±2dB | 52±2dB |
| Repetitive attaching/ detaching | ΔLᵢ<0.2dB Lᵣ>40dB | ΔLᵢ<0.2dB Lᵣ>40dB | ΔLᵢ<0.2dB Lᵣ>40dB | ΔLᵢ<0.2dB Lᵣ>40dB |
| Vibration/ impact test | | | | |
| Temperature- humidity cycle | ΔLᵢ<0.2dB Lᵣ>40dB | ΔLᵢ<0.2dB Lᵣ>40dB | ΔLᵢ<0.2dB Lᵣ>40dB | ΔLᵢ<0.2dB Lᵣ>40dB |
| Temperature cycle | ΔLᵢ<0.2dB Lᵣ>40dB | ΔLᵢ<0.2dB Lᵣ>40dB | ΔLᵢ<0.2dB Lᵣ>40dB | ΔLᵢ<0.2dB Lᵣ>40dB |
| High temp. storage | ΔLᵢ<0.2dB | ΔLᵢ<0.2dB | ΔLᵢ<0.2dB | ΔLᵢ<0.2dB |
| Low temp. storage | Lᵣ>40dB | Lᵣ>40dB | Lᵣ>40dB | Lᵣ>40dB |
| ΔLᵢ: Variation of insertion loss | | | | |
| Lᵣ: Return loss | | | | |

### [Embodiment 8 to 10]

Using the resin or resin compound shown in Table 15, a plastic optical alignment tubular sleeve was manufactured as in the embodiment 6 and 7. The inner diameter, thickness and length were set as in the embodiment 7. The gauge retention forces of the plastic optical alignment tubular sleeve for the SC-and MU-type ferrules were within the allowable range. As shown in Table 14, the connection characteristics of the single-mode optical fibers are at the same level as the embodiment 6 and 7. In various reliability tests, the necessary characteristics of the conversion connector were satisfied.

**[Table 15]**

| Resin and resin compound and their characteristics in embodiment 8 to 10 | | | |
|---|---|---|---|
| Embodiment | Resin | Additive | flexural modulus |
| 8 | Polyethersulfone | Carbon fiber 20% | 800 kgf/mm² |
| 9 | Polyetherimide | Inorganic filler 40% | 1,200 kgf/mm² |
| 10 | Polysulfone | Inorganic filler 30% | 600 kgf/mm² |

### [Example 1 to 5 for Comparison]

Using the resin of the embodiment 6, plastic optical alignment tubular sleeves for conversion connectors, which were out of an appropriate range as shown in Table 16, were fabricated by changing the inner diameter and thickness of the cylindrical sleeve for the SC-type ferrule and the cylindrical sleeve for the MU-type small-diameter ferrule. The plastic optical alignment tubular sleeves manufactured in this manner were assembled into conversion connectors and measurements were made of insertion loss and return loss, and insertion loss variations and return loss in various reliability tests. The results of measurements are shown in Table 16. In either of these samples, the insertion loss and return loss, or loss variations in the reliability tests were higher than the target values, indicating that the desirable characteristics as found in the embodiment 6 to 10 could not be realized.

**[Table 16]**

| Results of Comparison Example 1 to 5 | | | | | |
|---|---|---|---|---|---|
| Evaluation Item | Example 1 | Example 2 | Example 3 | Example 4 | Example 5 |
| SC inner dia. | 2.480 mm | 2.492 mm | 2.496 mm | 2.487 mm | 2.496 mm |
| SC thickness t₁ | 0.604 mm | 0.310 mm | 1.050 mm | 0.830 mm | 0.762 mm |
| SC thickness t₂ | 0.504 mm | 0.210 mm | 0.950 mm | 0.730 mm | 0.662 mm |
| MU inner dia. | 1.247 mm | 1.246 mm | 1.246 mm | 1.238 mm | 1.246 mm |
| MU thickness t₁ | 0.360 mm | 0.380 mm | 0.375 mm | 0.380 mm | 0.207 mm |
| MU thickness t₂ | 0.260 mm | 0.280 mm | 0.275 mm | 0.280 mm | 0.107 mm |
| Insertion loss | 0.67±0.4d B | 1.06±0.3d B | 1.15±0.3d B | 0.74±0.4d B | 2.06±0.6d B |
| Return loss | 45±2dB | 48±2dB | 43±2dB | 44±2dB | 48±2dB |
| Repetitive attaching/ deteching | ΔLᵢ<0.2dB Lᵣ>40dB | ΔLᵢ<0.2dB Lᵣ>40dB | ΔLᵢ<0.2dB Lᵣ>40dB | ΔLᵢ<0.2dB Lᵣ>40dB | ΔLᵢ<0.2dB Lᵣ>40dB |
| Vibration/ impact test | | | | | |
| Temp.-humidity cycling | ΔLᵢ<0.2dB Lᵣ>40dB | ΔLᵢ=0.3dB Lᵣ>40dB | ΔLᵢ<0.2dB Lᵣ>40dB | ΔLᵢ<0.2dB Lᵣ>40dB | ΔLᵢ<0.2dB Lᵣ>40dB |
| Temp. cycling | ΔLᵢ=0.3dB Lᵣ>40dB | ΔLᵢ=0.5dB Lᵣ>40dB | ΔLᵢ=0.3dB Lᵣ>40dB | ΔLᵢ=0.6dB Lᵣ>40dB | ΔLᵢ=0.4dB Lᵣ>40dB |
| High temp. storage | ΔLᵢ=0.5dB Lᵣ>40dB | ΔLᵢ<0.2dB Lᵣ>40dB | ΔLᵢ<0.2dB Lᵣ>40dB | ΔLᵢ<0.2dB Lᵣ>40dB | ΔLᵢ<0.2dB Lᵣ>40dB |
| Low temp. storage | | | | | |
| ΔLᵢ: Variation of insertion loss | | | | | |
| Lᵣ: Return loss | | | | | |

The present invention has been described in detail with respect to preferred embodiments, and it will now be apparent from the foregoing to those skilled in the art that changes and modifications may be made without departing from the invention in its broader aspect, and it is the intention, therefore, in the apparent claims to cover all such changes and modifications as fall within the true spirit of the invention.

## Claims

1. A plastic optical alignment sleeve for a conversion connector, which is installed, or to be installed, in an adapter used to connect optical fiber cords each having optical fibers inserted therein and which optically connects the optical fibers by inserting ferrules with different outer diameters attached to free ends of the optical fiber cords into the sleeve from its left and right ends, the plastic optical alignment sleeve in its basic geometry characterized by comprising:
left and right thick hollow cylinders differing from each other in inner diameter and thickness; and
a joint part formed at an intermediate portion of the sleeve for connecting the left and right thick hollow cylinders with different dimensions;
wherein the plastic sleeve is formed of a noncrystalline thermoplastic resin or thermosetting resin or of a resin compound;
wherein a slit is formed through the left and right thick hollow cylinders and the joint part.

2. A plastic optical alignment sleeve for conversion connector according to claim 1, characterized in that one of the thick hollow cylinders of the plastic sleeve has an inner diameter of between approximately 1.243 mm and 1.248 mm and a thickness of between approximately 0.2 mm and 0.7 mm and the other thick hollow cylinder has an inner diameter of between approximately 2.475 mm and 2.497 mm and a thickness of between approximately 0.4 mm and 0.8 mm.

3. A plastic optical alignment sleeve for conversion connector according to claim 1, characterized in that the joint part of the plastic sleeve is shaped like a truncated hollow cone whose angle of elevation as seen from the small-diameter thick hollow cylinder is in a range of between 30 degrees and 75 degrees, and the thickness of the joint part is in a range of between approximately 0.2 mm and 0.7 mm.

4. A plastic optical alignment sleeve for conversion connector according to claim 1, characterized in that the noncrystalline thermoplastic resin or resin compound is one of resins including at least polyethersulfone, polysulfone and polyetherimide, or a resin compound including one of these resins and an inorganic filler or carbon fiber, and characterized in that the thermosetting resin or resin compound is epoxy resin or epoxy resin compound including silica powder.

5. A plastic optical alignment sleeve for conversion connector according to claim 2, characterized in that the joint part of the plastic sleeve is shaped like a truncated hollow cone whose angle of elevation as seen from the small-diameter thick hollow cylinder is in a range of between 30 degrees and 75 degrees, and the thickness of the joint part is in a range of between approximately 0.2 mm and 0.7 mm.

6. A plastic optical alignment sleeve for conversion connector according to claim 2, characterized in that the noncrystalline thermoplastic resin or resin compound is one of resins including at least polyethersulfone, polysulfone and polyetherimide, or a resin compound including one of these resins and an inorganic filler or carbon fiber, and characterized in that the thermosetting resin or resin compound is epoxy resin or epoxy resin compound including silica powder.

7. A plastic optical alignment sleeve for conversion connector according to claim 3, characterized in that the noncrystalline thermoplastic resin or resin compound is one of resins including at least polyethersulfone, polysulfone and polyetherimide, or a resin compound including one of these resins and an inorganic filler or carbon fiber, and characterized in that the thermosetting resin or resin compound is epoxy resin or epoxy resin compound including silica powder.

8. A plastic optical alignment sleeve for conversion connector according to claim 5, characterized in that the noncrystalline thermoplastic resin or resin compound is one of resins including at least polyethersulfone, polysulfone and polyetherimide, or a resin compound including one of these resins and an inorganic filler or carbon fiber, and characterized in that the thermosetting resin or resin compound is epoxy resin or epoxy resin compound including silica powder.

9. A plastic optical alignment sleeve for a conversion connector, which is installed, or to be installed, in an adapter used to connect optical fiber cords each having optical fibers inserted therein and which optically connects the optical fibers by inserting ferrules with different outer diameters attached to free ends of the optical fiber cords into the sleeve from its left and right ends, the plastic optical alignment sleeve in its basic geometry characterized by comprising:
left and right thick hollow cylinders differing from each other in inner diameter and thickness; and
a joint part formed at an intermediate portion of the sleeve for connecting the left and right thick hollow cylinders with different dimensions;
wherein the plastic sleeve is formed of a noncrystalline thermoplastic resin or thermosetting resin or of a resin compound;
wherein the left and right thick hollow cylinders have inner surfaces of the same cylindrical shape as their outer surfaces or a polygonal prism shape enclosed by straight lines, and also have at least three planes on the inner surface side that contact the ferrule;
wherein a diameter (d) of a virtual cylinder connecting those points at which the inner surface contacts the ferrule is smaller than an outer diameter of the ferrule.

10. A plastic optical alignment sleeve for conversion connector according to claim 9, characterized in that the diameter (d) of the virtual cylinder connecting those points on one of the thick hollow cylinders that contact the ferrule is in a range of between approximately 1.246 mm and 1.248 mm and the thickness of the thinnest part of the virtual cylinder is in a range of between approximately 0.2 mm and 0.3 mm, and characterized in that the diameter (d) of the virtual cylinder connecting those points on the other thick hollow cylinder that contact the ferrule is in a range of between approximately 2.490 mm and 2.498 mm and the thickness of the thinnest part of the virtual cylinder is in a range of between approximately 0.3 mm and 0.8 mm.

11. A plastic optical alignment sleeve for conversion connector according to claim 9, characterized in that the joint part of the plastic sleeve is shaped like a truncated hollow cone whose angle of elevation as seen from the small-diameter thick hollow cylinder is in a range of between 30 degrees and 75 degrees, and the thickness of the thinnest part of the joint part is in a arrange of between approximately 0.2 mm and 0.3 mm.

12. A plastic optical alignment sleeve for conversion connector according to claim 9, characterized in that the noncrystalline thermoplastic resin or resin compound is one of resins including at least polyethersulfone, polysulfone and polyetherimide, or a resin compound including one of these resins and an inorganic filler or carbon fiber, and characterized in that the thermosetting resin or resin compound is epoxy resin or epoxy resin compound including silica powder.

13. A plastic optical alignment sleeve for conversion connector according to claim 10, characterized in that the joint part of the plastic sleeve is shaped like a truncated hollow cone whose angle of elevation as seen from the small-diameter thick hollow cylinder is in a range of between 30 degrees and 75 degrees, and the thickness of the thinnest part of the joint part is in a arrange of between approximately 0.2 mm and 0.3 mm.

14. A plastic optical alignment sleeve for conversion connector according to claim 10, characterized in that the noncrystalline thermoplastic resin or resin compound is one of resins including at least polyethersulfone, polysulfone and polyetherimide, or a resin compound including one of these resins and an inorganic filler or carbon fiber, and characterized in that the thermosetting resin or resin compound is epoxy resin or epoxy resin compound including silica powder.

15. A plastic optical alignment sleeve for conversion connector according to claim 11, characterized in that the noncrystalline thermoplastic resin or resin compound is one of resins including at least polyethersulfone, polysulfone and polyetherimide, or a resin compound including one of these resins and an inorganic filler or carbon fiber, and characterized in that the thermosetting resin or resin compound is epoxy resin or epoxy resin compound including silica powder.

16. A plastic optical alignment sleeve for conversion connector according to claim 13, characterized in that the noncrystalline thermoplastic resin or resin compound is one of resins including at least polyethersulfone, polysulfone and polyetherimide, or a resin compound including one of these resins and an inorganic filler or carbon fiber, and characterized in that the thermosetting resin or resin compound is epoxy resin or epoxy resin compound including silica powder.
